# EUROPEAN PATENT SPECIFICATION

(11) **EP 2 241 227 B1**
(45) Date of publication and mention of the grant of the patent: **25.12.2019**
(21) Application number: 10153399.0
(22) Date of filing: 12.02.2010
(51) Int. Cl.: A47J 27/022

(54) **Method for the production of pots and the like and pot obtained with said method**
Verfahren zur Herstellung von Töpfen und dergleichen, und Topf erhalten mit diesem Verfahren
Méthode pour la production de pots et autres, et pot obtenu avec cette méthode

(30) Priority: 12.02.2009 IT VR20090010
(43) Date of publication of application: 20.10.2010
(73) Proprietor: TVS S.p.A, 61029 Urbino (PS) (IT)
(72) Inventor: Bertozzini, Giuseppe, 61029 Urbino (PS) (IT)
(74) Representative: Feltrinelli, Secondo Andrea

(56) References cited:
- EP-A1- 1 053 711
- WO-A1-03/043473
- WO-A1-03/043473
- DE-A1- 4 000 536
- JP-B2- 4 139 682
- US-A1- 2006 096 467
- US-A1- 2008 223 359

## Description

### TECHNICAL FIELD OF THE INVENTION

The present invention concerns a procedure for making pots and the pot made with such a procedure.

### STATE OF THE ART

It is known that some modern types of cooking pots comprise assembled parts which are made from different metals, with different mechanical and thermal properties which are suitable for obtaining certain results in use.

For example, some pots are made up of a bottom made from ferromagnetic material and by a bowl made from non ferromagnetic material, fixed to such a bottom. The coupling of such components allows good technical results to be obtained in the use of the pan in particular with induction type heat sources, since the bottom made from ferromagnetic material is heated through parasitic currents that are generated due to the magnetic field generated by the induction source, and transfers the heat to the bowl made from non ferromagnetic material; the bowl then provides for distributing the heat to the food gradually and evenly. The conventional procedure for making this type of pan mainly consists of braze welding the bottom made from ferromagnetic material to the bowl made from non ferromagnetic material, with an interposition of a further disc, by using a brazing alloy. The aforementioned braze welding is carried out by suitably pressing the components on to one another and making them undergo a heating of around 500°C. The heating is carried out through an induction device, in which some metallic coils crossed by current induce an electromagnetic field which crosses the piece being made. Such an electromagnetic field in turn induces parasitic currents in the bottom made from ferromagnetic material that thus reaches the desired temperature: the bottom finally heats the parts made from non ferromagnetic material and the brazing alloy by conduction, so that all the components are welded to one another.

At the end of the braze welding procedure, the semifinished product thus obtained is cooled to a temperature in which it can be handled safely, i.e. lower than 40°C: after this cooling phase the object has a deformed bottom, for example outwards. This phenomenon is due to the tension exerted by the ferromagnetic material on the parts made from non ferromagnetic material. More in detail, it can be observed that the ferromagnetic material cools down faster on the outside, i.e. at its free end, instead of on the inside, i.e. at the surface in contact with the non ferromagnetic material. This causes tensile stress of the bottom of the pan towards the outside, with consequent deformation: at the end of the cooling the object thus has a bottom which is not flat, but substantially convex.

As well as this obvious defect, the object resulting from the braze welding procedure also has welding burrs along the bottom edge, at the contact plane of the components made from different material.

The mentioned defects must be eliminated before continuing on to the subsequent finishing procedures, and therefore, first of all, the so called restoring of the conical shape of the bottom of the object must be carried out. This restoring is obtained by positioning the object on a template and by using a press provided with a suitable punch, so as to exert a suitable pressure on the bottom of the object.

Secondly, the aforementioned welding burrs must then be removed by mounting the object on a machine tool similar to a lathe.

At this point the object undergoes various finishing procedures, amongst which, in particular, the coating of the inner part and the coating of the outer part. The various thermal stresses that occur during the machining of the object determine its repeated dilations and contractions, which may occur even later during the use of the object.

Currently, in order to limit this undesired phenomenon as much as possible, pots are designed having the non ferromagnetic parts with a great thickness, so that this opposes the deformation due to the contraction of the ferromagnetic material.

However, there are objects in which the thickness of the parts made from non ferromagnetic material must remain small due to design, aesthetic, or other requirements. Therefore, in these situations, it is necessary to repeat the restoring of the conical shape of the bottom even after the pan has been coated. This last operation, of course, has a substantial negative impact upon the overall production time and costs of the object; moreover, it can determine an increase of the amount of process waste.

Other techniques for fixing the steel bottom to the body in non ferromagnetic material are also known, for example impact bonding, which can have the same drawback relative to the deformation of the object.

WO 03/043473 A1 discloses a container provided with a bottom and a layered base connected to the bottom.

The base comprises an upper conductive layer, an inductive layer, a lower conductive layer and a protective layer, in contact with the thermal source. The protective layer is not joined to the pot body by means of a braze welding phase.

DE 4000536 A1 discloses a cooking utensil especially comprising a container part made from stainless steel or ceramic, and a base made from aluminium.

US 2008/0223359 A1 discloses an energy efficient cookware including a base and a wall, and a bottom comprising a linear pattern for flame guide channels connected to the base; the channels are made from aluminium alloy.

EP 1053711 A1 discloses a cooking appliance comprising a ferromagnetic base covering and a base, wherein the base covering forms a surface for resting on the cooking plate having a predetermined curve; the receptacle of the cooking appliance is made from a ferromagnetic material.

US 2006/096467 A1 discloses a cooking utensil comprising an aluminium container which includes a heat distributing or diffusing plate made up of a stainless steel disc on the outer surface of its bottom: the disc includes non-continuous cuts shaped like small holes or slots.

### PURPOSES OF THE INVENTION

One purpose of the present invention is to improve the state of the art.

Another purpose of the present invention is to devise a procedure for producing pots that allows high quality objects to be made that are long lasting, reducing the costs and the production time.

A further purpose of the present invention is to implement a procedure for producing pots that is simplified, increasing or maintaining the quality of the product.

Yet another purpose of the present invention is to create a procedure for producing pots that allows pans having a light weight to be made, and in particular with an optimized weight ratio between ferromagnetic material and non ferromagnetic material. Another purpose of the present invention is that of devising a procedure for producing pots suitable for making high quality objects and at the same time having small thicknesses of the parts made from non ferromagnetic material.

Last but not least purpose of the present invention is that of creating a procedure for producing pots having high energy efficiency, i.e. to use the electromagnetic field, dispensed by the induction plates, in the best way possible.

In accordance with the invention a procedure for producing pots is foreseen according to the independent claim 1.

In accordance with another aspect of the invention a pot is foreseen according to the independent claim 7. The dependent claims refer to preferred and advantageous embodiments of the invention.

### BRIEF DESCRIPTION OF THE DRAWINGS

Other characteristics and advantages of the invention shall become clearer from the description of embodiments of a procedure for producing pots and the like according to the invention, illustrated as an example in the attached drawings, in which:
figure 1 is a top side section and exploded view of a pot, in one phase of the procedure;
figure 2 is a top side section view of the same pot, in another phase of the procedure;
figure 3 is a top side section view of the pot in a subsequent phase of the procedure;
figure 4 is a detail of figure 3;
figure 5 is a top side section view of the pot in a further phase of the procedure;
figure 5a is a top side section view of the pot in one of its further embodiments;
figure 6 is a top view of an embodiment of the pot made with the procedure according to the invention;
figure 7 is a top view of another embodiment of the pot made with the procedure according to the invention;
figure 8 is a top view of a further embodiment of the pot made with the procedure according to the invention;
figure 9 is a top view of a further embodiment of the pot made with the procedure according to the invention;
figure 10 is a section view of a detail of a further embodiment of the pot made with the procedure according to the invention;

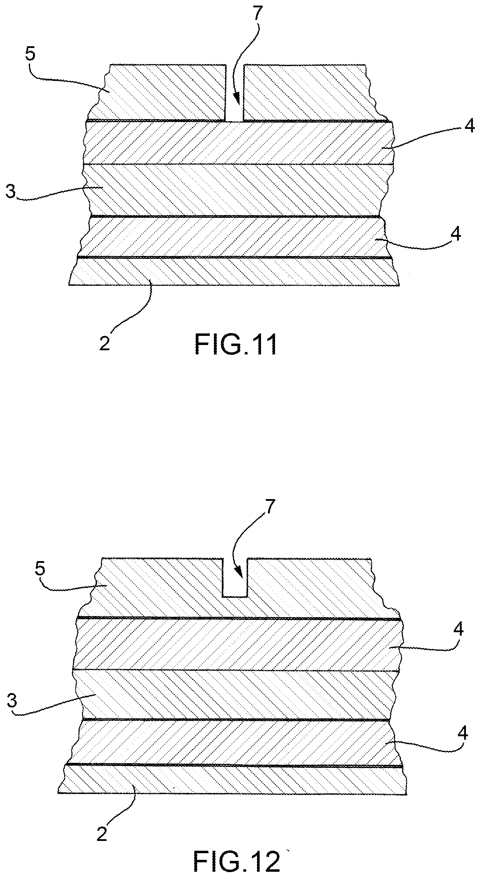

figure 11 is a detail of figure 7
figure 12 is a section view of a detail of a further embodiment of the pot made with the procedure according to the invention, equipped with non-through cuts.

### EMBODIMENTS OF THE INVENTION

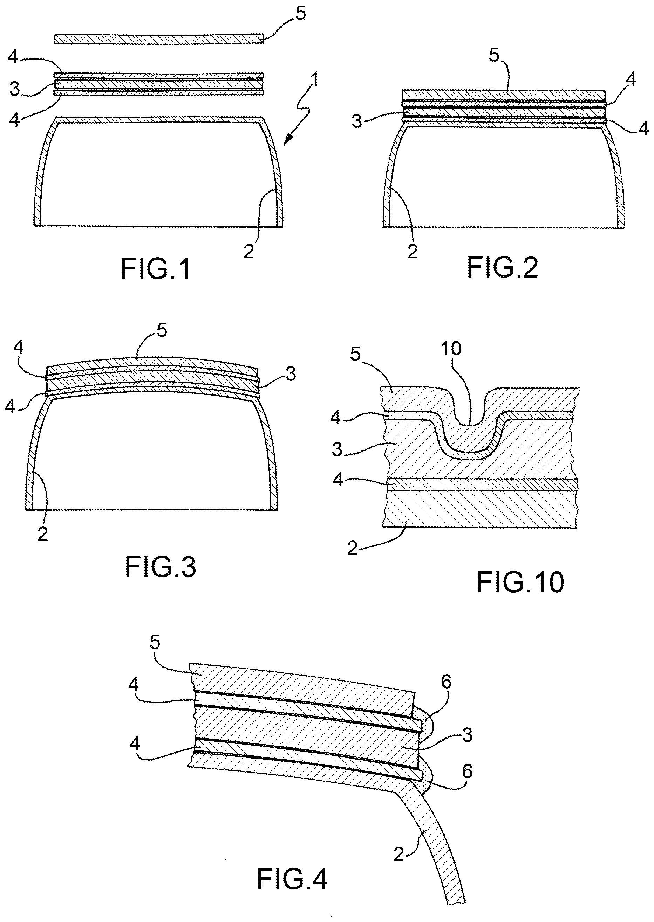

With particular reference to figure 1, a pot made with the procedure according to the present invention is wholly indicated with reference numeral 1.

The procedure described relates in particular to the making of pots for example of the non-stick type and suitable for being used with induction heat sources; it should however be emphasised that the reference to this particular type of pot is only for illustrative and not limiting purposes.

In one embodiment, the procedure can be applied for example to an automatic machine - not represented in the figures - suitably made to carry out some or all of the production phases.

The procedure foresees a phase of preparing a pot body 2, and of loading it onto the automatic machine. Such a pot body 2, substantially having set shape and size based upon the product to be made - for example a saucepan, pan, or others - is made from a non ferromagnetic material, for example from an aluminium alloy.

According to the invention, an intermediate element 3 is also prepared, and it is then loaded onto the automatic machine.

According to the invention, such an intermediate element 3 is absent.

The intermediate element 3, having essentially the same dimensions as those of the bottom of the pot 1 to be made, can be made from non ferromagnetic material, for example from aluminium alloy.

For example, it can be substantially disc shaped in the case in which the product to be made is a circular pot, and it is generally thin.

Brazing alloy 4 is distributed on the intermediate element 3, for example through immersion or through other techniques.

In one embodiment of the procedure this brazing alloy 4 is evenly distributed, for example in the pasty state, on both the surfaces of the aforementioned intermediate element 3.

The brazing alloy 4 on the surfaces of the intermediate element 3 can be dried after being distributed.

It is further foreseen for there to be a preparing phase of a bottom 5 for the pot 1 to be produced: this bottom 5 is made from ferromagnetic material, for example steel AISI 430, and has shape and sizes determined based upon the product to be made, in particular the bottom 5 has an essentially planar shape or at least it does not have a concave or convex profile at the centre of the bottom 5 with respect to its edges.

The regular shape of the bottom 5 allows the joining phases of the bottom 5 itself with the pot body 2 to be managed more easily.

It should be noted that of course the thicknesses of the pot body 2, of the intermediate element 3 and of the bottom 5 can be any, in relation to the specific design requirements of the pot 1.

According to the present invention, the pot body has a thickness of between 2.0 and 5.5 mm., the intermediate element 3 has a thickness of between 0.8 and 3.0 mm. and the bottom 5 has a thickness of between 0.3 and 0.7 mm.

The pot body 2, the intermediate element 3 with brazing alloy 4 and the bottom 5, thus prepared, are packed one on top of the other, in the composition that will then make up the end product, for example so as to make it approximately match the edges.

The following phase of the procedure foresees that the pot body 2, the intermediate disc 3 with brazing alloy 4 and the bottom 5 are loaded onto a braze welding press - not represented in the figures - in the automatic machine that actuates the procedure.

In a subsequent phase of the procedure, the aforementioned pot body 2, the intermediate element 3 and the bottom 5, packed on to one another, are induction heated, through a device - not represented in the figures - that generates an electromagnetic field with a suitable intensity, which in turn induces parasitic currents in particular in the bottom 5 made from ferromagnetic material.

As an example, the bottom 5 reaches temperatures which are typically of between 300°C and 1000°C, and by conduction it consequently heats the intermediate element 3 and the pot body 2.

During this heating phase, the braze welding of the pot body 2, of the intermediate element 3 and of the bottom 5, packed on to one another, is carried out, by exerting a suitable pressure with the press.

After the braze welding phase, the pot 1 thus assembled, illustrated in figure 2, is unloaded from the welding press: in this phase it is at a temperature which is still rather high.

Then a cooling phase of the braze welded pot 1 follows, for example through the forced circulation of a fluid, up to a temperature in which the pot 1 itself can be handled without risks, i.e. at a temperature which is generally lower than 40°C.

In this phase of the procedure, the pot 1 has the bottom 5 deformed outwards, as can be observed in particular in figure 3. This phenomenon is due to the tensions exerted by the ferromagnetic material of the bottom 5 on the remaining parts of the pot 1: this phenomenon is gradually amplified as the temperature of the pot 1 decreases.

In particular, the material of the bottom cools down faster outside, i.e. on its free surface, rather than inside, i.e. along the surfaces in contact with the intermediate element 3 or the pot body 2.

Therefore, the procedure foresees at this point for there to be a mechanical restoring phase of the conical shape of the bottom 5. In one embodiment of the procedure, this phase is carried out by positioning the pot 1 on the template of a press, equipped with a suitable dedicated punch, and by exerting a suitable pressure on the bottom 5.

Moreover, the pot 1 produced by the braze welding phase has welding burrs 6 along the edge of the bottom 5, substantially at the contact plane between the pot body 2, the possible intermediate element 3 and the bottom 5: such welding burrs 6 are in particular illustrated in the detail of figure 4.

The procedure foresees also a removal phase of the aforementioned burrs 6: in one embodiment of the procedure, this removal phase of the welding burrs 6 is carried out on a suitable machine tool for the removal of shavings.

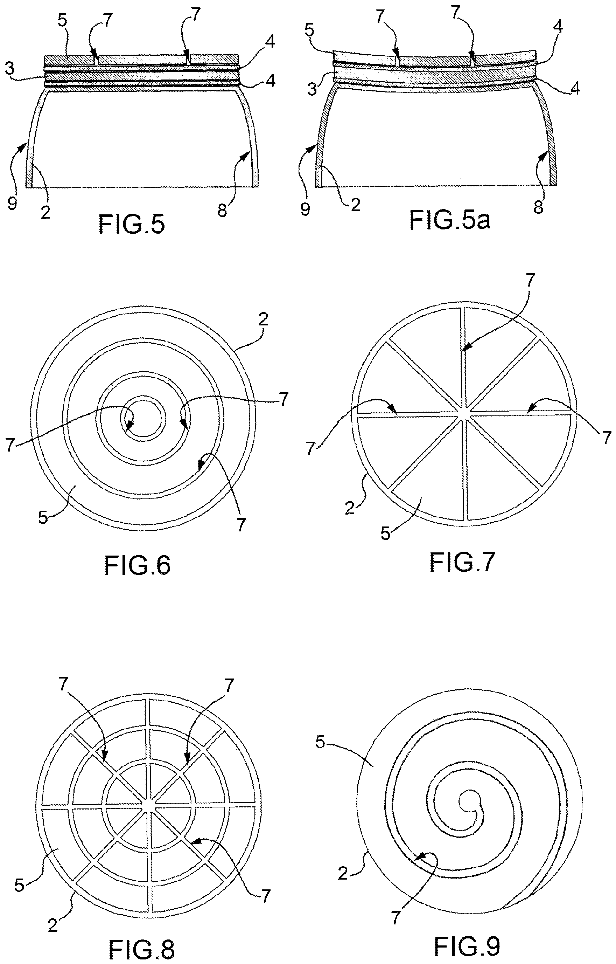

According to the present invention, the procedure also comprises a phase of making at least one cut 7 in the bottom 5 of the pot 1, which introduces at least one discontinuity in the bottom 5 itself (figure 5) .

The introduction of such a discontinuity has the purpose of decreasing in a decisive way the tensions that the bottom 5 exerts on the rest of the pot 1 due to the contraction that follows its cooling: the obvious advantage that follows is the substantial reduction of the extent of the deformation phenomenon of the bottom 5 itself due to heating and cooling cycles that the pot 1 undergoes both during its completion of the productive process, as well as during its use for cooking food products.

According to the present invention, a plurality of cuts 7 can be made in the bottom 5, according to geometries and distributions that can vary in relation to the specific product to be made. In particular, the overall number of cuts 7, their position with respect to the bottom 5, their width, their length and their depth, can vary.

For example, in the version illustrated in figure 6, the cuts 7 are made according to circumferential directions.

In the version represented in figure 7, on the other hand, the cuts 7 are made according to radial directions.

In yet another version, illustrated in figure 8, the cuts 7 are made both according to radial directions as well as to circumferential directions.

In yet a further version illustrated in figure 9, the cuts 7 are made according to at least one spiral.

Moreover, the cuts 7 can, for example be through cuts or non-through cuts on the bottom 5.

In the procedure according to the present invention, the phase of making at least one cut 7 in the bottom 5 of the pot 1 is carried out at the same time as the aforementioned removal phase of the welding burrs 6: in this way it is possible to minimize the costs of such an operation, for example by using the same machine tool and/or the same equipment.

The procedure also comprises a phase of making at least one surface rib 10, with set geometry and position in relation to the specific product to be made, in the bottom 5 of the pot 1: this phase of making at least one rib 10 can be carried out through press coining, also at the same time as the restoring phase of the conical shape of the bottom 5, or with another dedicated phase.

The making of such a rib 10, or of a plurality thereof, makes it possible to reduce the contraction tensions of the bottom 5, and to obtain a result with quality similar to that which can be obtained by making the cuts 7, in terms of reduced or null deformation of the bottom 5.

Therefore, in the present procedure, both cuts 7 and ribs 10 can be made in combination in the bottom 5.

In the rest of the description, we shall illustrate some typical phases for producing pots 1, covered in non-stick material. However, these phases are described as an illustrative example and not for limiting purposes and should not be taken to restrict the application of the present invention.

The procedure then comprises a phase of washing the inner surface 8 and the outer surface 9 of the pot 1, a phase of sanding the inner surface 8 and the outer surface 9; a phase of pickling the inner surface 8 and the outer surface 9; a phase of coating the inner surface 8 of the pot 1 with non-stick coating, in particular if it is necessary to make a non-stick pot.

Such coating phase can also be carried out with polytetrafluoroethylene, or with other non-stick materials, or with nanotechnological materials, or with enamels, or with silicone - polyester lacquers.

The procedure subsequently comprises a phase of drying the coating inside the pot 1, carried out for example at about 450°C; a phase of coating with lacquer the outer surface 9 of the pot 1; a phase of drying the outer coating, carried out for example at about 270°C; a phase of finishing the bottom 5.

As an example, the finishing of the bottom 5 comprises one or more of the following phases: serigraphy, glazing, brushing, sanding or abrasion, polishing, laser marking.

The pot thus obtained, thanks to the cuts 7 in the bottom 5 which substantially limit or completely eliminate the tension due to the contractions of the bottom 5, is without deformations, and therefore does not need a further restoring phase of the conical shape of the bottom 5 itself after the aforementioned coating phases.

This advantage is obtained also for pots that have low thicknesses in the aluminium parts, i.e. the pot body and the intermediate element, if there is one, i.e. that in other words would not *per se* have sufficient structural resistance to oppose the contraction of a bottom 5 without cuts 7, according to the conventional technique.

It has thus been seen how the invention achieves the set purposes, and therefore has substantial advantages. The present procedure, which as mentioned does not need a restoring phase of the conical shape of the bottom 5 to be carried out after the coating thanks to the fact that cuts 7 are made, making it possible first of all to substantially reduce the production cost and time of the pot.

Secondly, but not less important, the pots made with the present procedure have a higher quality with respect to those made with conventional methods, and also make it possible to obtain a better performance in use.

Indeed, pots produced by applying the procedure according to the present invention are distinguished by high energy efficiency: the absence or the reduction of deformations of the bottom 5 during use of the pot, thanks to the cuts 7, makes it possible to always keep the bottom 5 itself in a more stable and better contact with the cook top. Moreover, these pots can be made with the pot body having a smaller thickness, since it is no longer necessary to have greater thicknesses to oppose the contraction of the bottom.

This translates into an optimization of the weight ratio between the ferromagnetic material of the bottom and the material of the pot body, and also into a possible reduction of the overall weight of the object. Moreover, the small mass of the pot body ensures that less energy is needed to bring the pot body 2 to the optimal cooking temperature.

## Claims

1. Procedure for making pots (1) comprising the following phases:
preparing at least one pot body (2) made from a non ferromagnetic material, for example from an aluminium alloy;
preparing at least one essentially planar bottom (5) made from ferromagnetic material, for example steel AISI 430, in particular the bottom (5) has an essentially planar shape or at least it does not have a concave or convex profile at the centre of the bottom (5) with respect to its edges;
joining said at least one bottom (5) to said at least one pot body (2), wherein said phase of joining said at least one pot body (2) to said at least one bottom (5) comprises a braze welding phase by means of a brazing alloy (4);
making a plurality of cuts (7) by removing material and/or by laser cutting and/or making a plurality of ribs (10) in said bottom (5);
wherein said cuts (7) are continuous through said bottom (5), and wherein said cuts (7) are through cuts or non-through cuts.

2. Procedure according to claim 1, comprising at least one preparing phase of at least one intermediate element (3) to be positioned between said bottom (5) and said pot body (2).

3. Procedure according to claim 2, comprising at least one phase of distributing at least one brazing alloy (4) on said intermediate element (3) by means of immersion.

4. Procedure according to claim 3, comprising at least one phase of drying said brazing alloy (4).

5. Procedure according to one of claims 2-4, comprising at least one phase of restoring the conical shape of the lower part of the pot body (2) joined to the bottom (5) and to the possible intermediate element (3).

6. Procedure according to one of the previous claims, comprising at least one phase of coating said pot (1) with non-stick material.

7. Pot comprising at least one pot body (2), made from a non ferromagnetic material, for example from an aluminium alloy, a bottom (5) joined to said pot body (2), wherein said bottom (5) is made from ferromagnetic material, for example steel AISI 430, in particular the bottom has an essentially planar shape or at least it does not have a concave or convex profile at the centre of the bottom (5) with respect to its edges, wherein said bottom (5) is joined to said pot body (2) through a brazing alloy (4), **characterised in that** said bottom (5) comprises a plurality of cuts (7) made by removal of material and/or by laser cutting and/or a plurality of ribs (10), wherein said cuts (7) are continuous through said bottom (5), and wherein said cuts (7) are through cuts or non-through cuts.

8. Pot according to claim 7, comprising at least one intermediate element (3) arranged between said bottom (5) and said pot body (2).

9. Pot according to claim 8, wherein the intermediate element (3) is braze welded to said bottom (5) and to said pot body (2).

10. Pot according to one of claims 7-9, comprising at least one outer layer of non-stick material.

11. Pot according to claim 7, wherein said bottom (5) comprises cuts (7) and/or ribs (10) of various lengths, widths, depths and arranged according to a combination: radial, and/or crossways, and/or circumferentially, and/or longitudinally and/or spirally.

12. Pot according to one of claims 7-11, **characterised in that** it is obtained through the procedure according to one of claims from 1 to 6.

## Patentansprüche

1. Verfahren zur Herstellung von Töpfen (1) und umfassend die folgenden Phasen:
Vorbereiten mindestens eines Topfkörpers (2) aus einem nicht ferromagnetischen Material, beispielsweise aus einer Aluminiumlegierung;
Vorbereiten mindestens eines im Wesentlichen ebenen Bodens (5) aus ferromagnetischem Material, beispielsweise Stahl AISI 430, wobei insbesondere der Boden (5) eine im Wesentlichen ebene Form aufweist oder zumindest kein konkaves oder konvexes Profil in der Mitte des Bodens (5) in Bezug auf seine Kanten aufweist;
Verbinden des besagten mindestens einen Bodens (5) mit dem besagten mindestens einen Topfkörper (2), worin die besagte Phase des Verbindens des besagten mindestens einen Topfkörpers (2) mit dem besagten mindestens einen Boden (5) eine Lötschweißphase mittels einer Lötlegierung (4) umfasst;
Herstellen einer Vielzahl von Schnitten (7) durch Entfernen von Material und/oder durch Laserschneiden und/oder Herstellen einer Vielzahl von Rippen (10) in dem besagten Boden (5);
worin die besagten Schnitte (7) kontinuierlich durch den besagten Boden (5) hindurch verlaufen, und worin die besagten Schnitte (7) durchgehende Schnitte oder nicht durchgehende Schnitte sind.

2. Verfahren nach Anspruch 1, umfassend mindestens eine Vorbereitungsphase mindestens eines Zwischenelements (3), das zwischen dem besagten Boden (5) und dem besagten Topfkörper (2) zu positionieren ist.

3. Verfahren nach Anspruch 2, umfassend mindestens eine Phase des Verteilens mindestens einer Lötlegierung (4) auf dem besagten Zwischenelement (3) mittels Eintauchen.

4. Verfahren nach Anspruch 3, umfassend mindestens eine Phase des Trocknens der besagten Lötlegierung (4).

5. Verfahren nach einem der Ansprüche 2-4, umfassend mindestens eine Phase des Wiederherstellens der konischen Form des unteren Teils des Topfkörpers (2), der mit dem Boden (5) und mit dem möglichen Zwischenelement (3) verbunden ist.

6. Verfahren nach dem vorangehenden Anspruch, umfassend mindestens eine Phase des Beschichtens des besagten Topfes (1) mit Antihaftmaterial.

7. Topf, umfassend mindestens einen Topfkörper (2), hergestellt aus einem nicht ferromagnetischen Material, beispielsweise aus einer Aluminiumlegierung, einen mit dem besagten Topfkörper (2) verbundenen Boden (5), worin der besagte Boden (5) aus ferromagnetischem Material, beispielsweise Stahl AISI 430, hergestellt ist, wobei insbesondere der Boden eine im Wesentlichen ebene Form aufweist oder zumindest kein konkaves oder konvexes Profil in der Mitte des Bodens (5) in Bezug auf seine Kanten aufweist, worin der besagte Boden (5) mit dem besagten Topfkörper (2) durch eine Lötlegierung (4) verbunden ist, **dadurch gekennzeichnet, dass** der besagte Boden (5) eine Vielzahl von Schnitten (7) umfasst, die durch Entfernen von Material und/oder durch Laserschneiden und/oder eine Vielzahl von Rippen (10) hergestellt sind, worin die besagten Schnitte (7) kontinuierlich durch den besagten Boden (5) verlaufen und worin die besagten Schnitte (7) durchgehende Schnitte oder nicht durchgehende Schnitte sind.

8. Topf nach Anspruch 7, umfassend mindestens ein Zwischenelement (3), das zwischen dem besagten Boden (5) und dem besagten Topfkörper (2) angeordnet ist.

9. Topf nach Anspruch 8, worin das Zwischenelement (3) mit dem besagten Boden (5) und dem besagten Topfkörper (2) lötgeschweißt ist.

10. Topf nach einem der Ansprüche 7-9, umfassend mindestens eine Außenschicht aus Antihaftmaterial.

11. Topf nach Anspruch 7, worin der besagte Boden (5) Schnitte (7) und/oder Rippen (10) unterschiedlicher Länge, Breite, Tiefe umfasst und nach einer Kombination angeordnet ist: radial und/oder kreuzweise und/oder kreisförmig und/oder längsgerichtet und/oder spiralförmig.

12. Topf nach einem der Ansprüche 7-11, **dadurch gekennzeichnet, dass** er durch das Verfahren nach einem der Ansprüche 1 bis 6 erhalten wird.

## Revendications

1. Procédure pour réaliser des pots (1) et comprenant les phases suivantes :
préparation d'au moins un corps de pot (2) constitué d'un matériau non ferromagnétique, par exemple d'un alliage d'aluminium ;
préparation d'au moins un fond essentiellement planaire (5) constitué de matériau ferromagnétique, par exemple de l'acier AISI 430, le fond (5) présentant en particulier une forme essentiellement planaire ou ne présentant au moins pas de profil concave ou convexe au centre du fond (5) par rapport à ses bords ;
jonction dudit au moins un fond (5) avec ledit au moins un corps de pot (2), dans lequel ladite phase de jonction dudit au moins un corps de pot (2) audit au moins un fond (5) comprend une phase de soudage par brasure au moyen d'un alliage de brasage (4) ;
réalisation d'une pluralité de découpes (7) en retirant de la matière et/ou par découpe au laser et/ou en réalisant une pluralité de nervures (10) dans ledit fond (5) ;
dans lequel lesdites découpes (7) sont continues à travers ledit fond (5), et dans lequel lesdites découpes (7) sont des découpes traversantes ou des découpes non traversantes.

2. Méthode selon la revendication 1, comprenant au moins une phase de préparation d'au moins un élément intermédiaire (3) devant être positionné entre ledit fond (5) et ledit corps de pot (2).

3. Méthode selon la revendication 2, comprenant au moins une phase de distribution d'au moins un alliage de brasage (4) sur ledit élément intermédiaire (3) par immersion.

4. Méthode selon la revendication 3, comprenant au moins une phase de séchage dudit alliage de brasage (4) .

5. Méthode selon l'une des revendications 2 à 4, comprenant au moins une phase de rétablissement de la forme conique de la partie inférieure du corps de pot (2) jointe au fond (5) et à l'élément intermédiaire (3) éventuel.

6. Méthode selon l'une des revendications précédentes, comprenant au moins une phase de revêtement dudit pot (1) avec un matériau non collant.

7. Pot comprenant au moins un corps de pot (2), constitué d'un matériau non ferromagnétique, par exemple d'un alliage d'aluminium, un fond (5) joint audit corps de pot (2), dans lequel ledit fond (5) est constitué d'un matériau ferromagnétique, par exemple d'acier AISI 430, le fond présentant en particulier une forme essentiellement planaire ou n'ayant au moins pas de profil concave ou convexe au centre du fond (5) par rapport à ses bords, dans lequel ledit fond (5) est joint audit corps de pot (2) par l'intermédiaire d'un alliage de brasage (4), **caractérisé en ce que** ledit fond (5) comprend une pluralité de découpes (7) réalisées par le retrait de matière et/ou par découpe au laser et/ou une pluralité de nervures (10), dans lequel lesdites découpes (7) sont continues à travers ledit fond (5), et dans lequel lesdites découpes (7) sont des découpes traversantes ou des découpes non traversantes.

8. Pot selon la revendication 7, comprenant au moins un élément intermédiaire (3) agencé entre ledit fond (5) et ledit corps de pot (2).

9. Pot selon la revendication 8, dans lequel l'élément intermédiaire (3) est soudé par brasure audit fond (5) et audit corps de pot (2).

10. Pot selon l'une des revendications 7 à 9, comprenant au moins une couche extérieure de matériau non collant.

11. Pot selon la revendication 7, dans lequel ledit fond (5) comprend des découpes (7) et/ou des nervures (10) de diverses longueurs, largeurs, profondeurs et agencé selon une combinaison : radial, et/ou transversal, et/ou sur la circonférence, et/ou longitudinal et/ou en spirale.

12. Pot selon l'une des revendications 7 à 11, **caractérisé en ce qu'**il est obtenu par la méthode selon l'une des revendications 1 à 6.
